(19) Europäisches Patentamt / European Patent Office / Office européen des brevets

(11) **EP 4 227 644 B1**

(12) **EUROPÄISCHE PATENTSCHRIFT**

(45) Veröffentlichungstag und Bekanntmachung des Hinweises auf die Patenterteilung:
**04.03.2026  Patentblatt 2026/10**

(21) Anmeldenummer: **23152331.7**

(22) Anmeldetag: **19.01.2023**

(51) Internationale Patentklassifikation (IPC):
***G01D 3/08*** *(2006.01)*

(52) Gemeinsame Patentklassifikation (CPC):
**G01D 3/08**

(54) **GEBER UND VORRICHTUNGEN ZUR ÜBERWACHUNG EINES GEBERS**

TRANSMITTER AND DEVICES FOR MONITORING A TRANSMITTER

TRANSMETTEUR ET DISPOSITIFS DE SURVEILLANCE D'UN TRANSMETTEUR

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **15.02.2022  DE 102022103536**

(43) Veröffentlichungstag der Anmeldung:
**16.08.2023  Patentblatt 2023/33**

(73) Patentinhaber: **SICK AG**
**79183 Waldkirch (DE)**

(72) Erfinder: **STERK, Alexander**
**79211 Denzlingen (DE)**

(74) Vertreter: **Manitz Finsterwald**
**Patent- und Rechtsanwaltspartnerschaft mbB**
**Martin-Greif-Straße 1**
**80336 München (DE)**

(56) Entgegenhaltungen:
CN-B- 107 769 630    CN-U- 206 578 635
US-A- 4 525 795    US-A- 5 777 223

**Beschreibung**

Die Erfindung betrifft Geber, wie Drehgeber oder lineare Geber, die Sinus und Cosinus Signale ausgeben, und Vorrichtungen zur Überwachung solcher Geber.

Die Überwachung von Gebern, insbesondere von Drehgebern oder Lineargebern mit analogen Sinus- und Cosinus-Signalverläufen, erfolgt üblicherweise mit integrierten Bausteinen, die die Vektorlänge der Gebersingale analog überwachen. Hiermit kann die korrekte Funktion des Gebers mit einer hohen Fehlerabdeckung überwacht werden.

Die exakte Überwachung der Vektorlänge mit diskreten Bauteilen ist sehr aufwendig. Am Markt verfügbare Lösungen sind auf eine Frequenz von 100 kHz beschränkt. Lösungen in Software benötigen eine sehr hohe Abtastfrequenz und eine nicht vertretbare Rechenleistung.

US 5 777 223 A offenbart ein Messsystem für Linear- und Winkelbewegungen mit einem ersten Längen- oder Winkelsensor, der nach einem ersten Messverfahren arbeitet und einen Eingangswert in Form einer Linear- oder Winkelbewegung in einen elektrische verarbeitbaren ersten Ausgangswert umwandelt. Ferner wird ein zweiter Längen- oder Winkelsensor, der mechanisch mit dem ersten Längen- oder Winkelsensor gekoppelt ist, und der nach einem vom ersten Messverfahren unterschiedlichen Messverfahren arbeitet, verwendet, um die Linear- und Winkelbewegung in einen elektrisch verarbeitbaren zweiten Ausgangswert umzuwandeln. Der erste und zweite Ausgangswert stehen für die weitere Verarbeitung und Auswertung zur Verfügung.

CN 206 578 635 U betrifft eine Hauptwelle einer Hochgeschwindigkeits-Hochpräzisionsdrehmaschine, mit einem FPGA-Interpolationsuntereilungsschaltkreis. Es wird die Position der Hauptwelle ermittelt, wobei Wert auf die Genauigkeit der wiederholten Positionierung, die gesamte Messgenauigkeit der digital gesteuerten Werkzeugmaschine und die Bearbeitungseffizienz gelegt wird.

CN 107 769 630 B betrifft ein Positionsdecodierungsüberwachungssystem eines Permanentmagnet-Synchronmotors. Das Überwachungssystem verfügt über Funktionen zur Überwachung der Stimulationsamplitude, der Stimulationsfrequenz und der Rückkopplungsüberwachung eines Drehtransformators. In Bezug auf einen Drehtransformator, der als Permanentmagnet-Synchronmotor-Steuerungssystem eines Positionssensors verwendet wird, kann das System zur Überwachung der Zustände einer Simulationsquelle und des Drehtransformators in einem Drehtransformator-Simulations- und -Demodulationssystem und zur Sicherstellung der Richtigkeit des Drehtransformator-Simulations- und -Demodulationssystems verwendet werden.

Es ist Aufgabe der Erfindung eine kostengünstige Lösung mit Standardbauteilen für eine funktional sichere Auswertung von Gebern mit Sinus- und Cosinus-Signalen bereitzustellen.

Die Lösung der Aufgabe erfolgt durch eine Vorrichtung zur Überwachung eines Gebers mit den Merkmalen des Anspruchs 1 und ein System mit den Merkmalen des Anspruchs 9.

Eine erfindungsgemäße Vorrichtung zur Überwachung eines Gebers (z. B. ein Drehgeber oder auch Drehwinkelgeber genannt; englisch: (Rotary) Encoder oder auch ein Lineargeber, der Sinus- und Cosinussignale erzeugt) umfasst: eine programmierbare Logikgatter-Anordnung; einen ersten Analog-Digital-Konverter (in anderen Worten: erster Analog-Digital-Wandler), eingerichtet zum Empfangen eines ersten Gebersignals des Gebers und zum Ausgeben eines ersten Datensignals an die programmierbare Logikgatter-Anordnung; und einen zweiten Analog-Digital-Konverter (in anderen Worten: zweiter Analog-Digital-Wandler), eingerichtet zum Empfangen eines zweiten Gebersignals des Gebers und zum Ausgeben eines zweiten Datensignals an die programmierbare Logikgatter-Anordnung; wobei die programmierbare Logikgatter-Anordnung eingerichtet ist zum Verarbeiten des ersten Datensignals und des zweiten Datensignals, um ein Überwachungsergebnis zu erhalten, wobei eine Summe aus einem Quadrat des ersten Gebersignals und einem Quadrat des zweiten Gebersignals berechnet wird und überprüft wird, ob die Summe einem Quadrat einer gewünschten Vektorlänge entspricht, wobei der erste Analog-Digital-Konverter und der zweite Analog-Digital-Konverter synchronisiert sind, und wobei die programmierbare Logikgatter-Anordnung eingerichtet ist zum Ausgeben eines Synchronisierungssignals an den ersten Analog-Digital-Konverter und an den zweiten Analog-Digital-Konverter; und wobei der erste Analog-Digital-Konverter und der zweite Analog-Digital-Konverter eingerichtet sind, sich basierend auf dem Synchronisierungssignal zu synchronisieren.

In anderen Worten werden einer programmierbaren Logikgatter-Anordnung zwei Gebersignale, die über separate (in anderen Worten: diskrete) Analog-Digital-Konverter erfasst werden, zugeführt, und die programmierbare Logikgatter-Anordnung ermittelt daraus ein Überwachungsergebnis. Es können einkanalige Analog-Digital-Konverter verwendet werden.

In einer anderen Ausführungsform kann anstelle der programmierbaren Logikgatter-Anordnung ein digitaler Signalprozessor (englisch: digital signal processor; DSP) verwendet werden. Dabei können der erste Analog-Digital-Konverter und der zweite Analog-Digital-Konverter in den DSP integriert sein.

Die Überwachung der vom Geber zu erfassenden Bewegung kann eine Überwachung sein, ob das erste Gebersignal und das zweite Gebersignal (zumindest näherungsweise) Koordinaten eines Kreises mit vorgegebenem Radius sind.

Der Geber kann ein Drehgeber sein. Mit der erfindungsgemäßen Vorrichtung kann dann die Drehbewegung des Drehgebers überwacht werden.

Der Geber kann ein Lineargeber, beispielsweise ein linearer Encoder, sein. Mit der erfindungsgemäßen Vorrichtung kann dann die lineare Bewegung des Lineargebers überwacht werden.

In einem orthogonalen Koordinatensystem beschreiben die beiden Größen Sinus und Cosinus einen Kreis. Dieser Kreis kann erfindungsgemäß mit der programmierbaren Logikgatter-Anordnung überwacht werden, die vorteilhafterweise ermittelt, ob das erste Gebersignal und das zweite Gebersignal einen Kreis nachbilden oder annähern.

Die erfindungsgemäße Lösung stellt eine Vektorlängenüberwachung (beispielsweise durch Überwachung von sin- und cos-Anteilen des Vektors) mit mehreren, vorzugsweise zwei, separaten Analog-Digital-Konvertern (englisch: analog-to-digital converter; ADC) und einer (einzigen, gemeinsamen) programmierbaren Logikgatteranordnung (englisch: field-programmable gate array; FPGA) bereit.

Die erfindungsgemäße Lösung ist sehr kostengünstig und ermöglicht eine Überwachung in Echtzeit bei sehr hohen Frequenzen mit Standardbauteilen.

Beispielsweise können kostengünstige diskrete ADCs mit adäquater Abtastfrequenz und serieller Anbindung zum Einsatz kommen. Dadurch ist es möglich, die Vektorlängenüberwachung mit diskreten Komponenten zu realisieren. Durch die Kombination von Standardkomponenten (ADCs, FPGAs (oder DSPs)) ist eine kostengünstige Signalüberwachung möglich, die nicht auf spezielle Komponenten zurückgreift. Zudem sind die Eigenschaften, wie z.B. die Abtastfrequenz, der Überwachung durch die Auswahl der Komponenten anpassbar.

In einer Ausgestaltung kann der erste Analog-Digital-Konverter mit dem zweiten Analog-Digital-Konverter synchronisiert sein. Beispielsweise kann die Kombination zweier synchronisierter diskreter ADCs und einer parallelen Signalverarbeitung in einem generischen FPGA bereitgestellt werden. Im FPGA kann die (später erläuterte) mathematische Gleichung abgebildet und effizient und in kurzer Zeit gelöst (oder analysiert) werden.

Beispielsweise kann die Summe der Quadrate der beiden Gebersignale (also die Summe aus dem Quadrat des ersten Gebersignals und dem Quadrat des zweiten Gebersignals) berechnet werden und überprüft werden, ob diese Summe dem Quadrat der gewünschten Vektorlänge entspricht. Im Fall, dass der Geber fehlerfrei funktioniert, wird anschaulich "$\sin^2 + \cos^2$" berechnet, was dem Quadrat des Radius des Kreises, den sin und cos beschreiben, also 1, entspricht. Es kann dann überprüft werden, ob "$\sin^2 + \cos^2$" in einem vorgegebenen Intervall um 1 liegen. Das Intervall kann symmetrisch um 1 gewählt werden, beispielsweise [0,7;1,3] oder [0,8;1,2] oder [0,9;1,1] oder [0,95;1,05], oder [0,99;1,01].

In einer Ausführungsform kann wobei die programmierbare Logikgatter-Anordnung eingerichtet sein zum Ausgeben eines Synchronisierungssignals an den ersten Analog-Digital-Konverter und an den zweiten Analog-Digital-Konverter, und der erste Analog-Digital-Konverter und der zweite Analog-Digital-Konverter können dazu eingerichtet sein, sich basierend auf dem Synchronisierungssignal zu synchronisieren. Beispielsweise kann das Synchronisierungssignal vom ersten Analog-Digital-Konverter und vom zweiten Analog-Digital-Konverter zum Auslösen der Analog-Digital-Wandlung verwendet werden. Es kann also durch das Synchronisierungssignal sichergestellt werden, dass der erste Analog-Digital-Konverter und der zweite Analog-Digital-Konverter die Analog-Digital-Wandlung zum gleichen Zeitpunkt ausführen, also das "Sampling" zum gleichen Zeitpunkt stattfindet.

In einer Ausgestaltung der Vorrichtung kann das erste Gebersignal einen zeitlichen Verlauf einer (Drehwinkel-)Position eines ersten Referenzpunktes des Gebers repräsentieren und das zweite Gebersignal einen zeitlichen Verlauf einer (Drehwinkel-)Position eines zweiten Referenzpunktes des Gebers repräsentieren.

Die zeitlichen Verläufe der (Drehwinkel-)Positionen des ersten Referenzpunkts und des zweiten Referenzpunkts können dabei im üblichen Betrieb des Gebers ermittelt werden, sodass keine zusätzlichen Daten, die nicht schon im normalen Betrieb des Gebers verfügbar sind, ermittelt werden müssen.

Vorteilhafterweise liegen der erste Referenzpunkt und der zweite Referenzpunkt um einen (Dreh-)Winkel von 90° voneinander entfernt.

Damit können dann das erste Gebersignal und das zweite Gebersignal um 90° phasenverschoben sein, sodass das erste Gebersignal beispielsweise ein sinusförmiges Signal und das zweite Gebersignal ein cosinusförmiges Signal sein kann. Wenn dann das erste Gebersignal und das zweite Gebersignal als Koordinaten aufgefasst werden, ergibt eine Darstellung des ersten Gebersignals und des zweiten Gebersignal bei ordnungsgemäßer Funktion des Gebers einen Kreis. Dazu kann eine Überwachung über eine analoge Nachbildung der mathematischen Gleichung $\sin^2 + \cos^2 = 1$ erfolgen, wobei diese Gleichung beispielsweise mit diskreten Bauteilen nachgebildet werden kann.

Die programmierbare Logikgatter-Anordnung kann eine Mehrzahl von physischen Elementen aufweist, deren Verschaltung programmierbar ist. Dadurch kann die programmierbare Logikgatter-Anordnung eine Logikschaltung nachbilden, und immer gleiche Berechnungen sehr effizient ausführen.

Die Vorrichtung kann zum Ermitteln des Überwachungsergebnisses mit einer Frequenz von mindestens 1 MHz eingerichtet sein.

Vorteilhafterweise ist die Vorrichtung eingerichtet zum Ermitteln des Überwachungsergebnisses, ohne ein (direktes) Vergleichen des ersten Gebersignals mit dem zweiten Gebersignal auszuführen.

Anschaulich werden die beiden Gebersignale mit der Gleichung $\sin^2 + \cos^2 = 1$ auf Konsistenz geprüft. Dabei ist die 1 das ideale Ergebnis. Im realen Einsatz wird dieses Berechnungsergebnis aus $\sin^2$ (was dem ersten ADC entspricht) + $\cos^2$ (was dem zweiten ADC entspricht) in einem Bereich um 1, beispielsweise von ca. 0,8 - 1,2 erwartet. Liegt das Berechnungsergebnis nicht in diesem Intervall, kann ein Fehler ausgegeben werden. Neben dem eigentlichen Überwachen kann die programmierbare Logikgatter-Anordnung (FPGA) das Timing zum zyklischen Auslesen der ADCs bereitstellen. Zudem kann das Auslesen so realisiert werden, dass die Daten aus dem ADC korrekt interpretiert werden. Ferner kann das Berechnungsergebnis an eine weiterverarbeitende Einheit weitergegeben werden. Zusätzlich können Funktionalitäten wie z.B. die Positionszählung via Quadraturzähler in der programmierbaren Logikgatter-Anordnung realisiert werden.

In einer Weiterbildung kann die Vorrichtung ferner enthalten: einen weiteren ersten Analog-Digital-Konverter, eingerichtet zum Empfangen eines weiteren ersten Gebersignals eines weiteren Gebers und zum Ausgeben eines weiteren ersten Datensignals an die programmierbare Logikgatter-Anordnung; und einen weiteren zweiten Analog-Digital-Konverter, eingerichtet zum Empfangen eines weiteren zweiten Gebersignals des weiteren Gebers und zum Ausgeben eines weiteren zweiten Datensignals an die programmierbare Logikgatter-Anordnung. Die programmierbare Logikgatter-Anordnung kann ferner zum Verarbeiten des weiteren ersten Datensignals und des weiteren zweiten Datensignals, um ein weiteres Überwachungsergebnis zu erhalten, eingerichtet sein.

Anschaulich werden in dieser Weiterbildung die Signale von mehreren Gebern mit jeweils separaten Analog-Digital-Konvertern von einer gemeinsamen programmierbaren Logikgatter-Anordnung zum Ermitteln eines jeweiligen Überwachungsergebnisses für jeden der Geber verarbeitet.

Vorteilhafterweise sind der erste Analog-Digital-Konverter und der zweite Analog-Digital-Konverter synchronisiert, und der weitere erste Analog-Digital-Konverter und der weitere zweite Analog-Digital-Konverter sind synchronisiert. Der erste/ zweite Analog-Digital-Konverter und der weitere erste/ zweite Analog-Digital-Konverter können ebenfalls synchronisiert sein, so dass sämtliche Analog-Digital-Konverter synchronisiert sind. In einer anderen Ausführungsform können der erste und der zweite Analog-Digital-Konverter nicht mit dem weiteren ersten und weiteren zweiten Analog-Digital-Konverter synchronisiert sein.

Die Aufgabe der Erfindung wird ferner durch ein System mit der oben beschriebenen Vorrichtung und einem Geber, der mit der Vorrichtung gekoppelt ist, gelöst. Dabei kann die oben beschriebene Vorrichtung beispielsweise auf einer Tragschiene, beispielsweise einer Hutschiene, angeordnet sein. Der Geber kann dann beispielsweise für eine speicherprogrammierbare Steuerung, beispielsweise eine Kleinsteuerung, verwendet werden, wobei die beschriebene Vorrichtung in der speicherprogrammierbaren Steuerung integriert sein kann.

Vorteilhafterweise umfasst der Geber ferner Messmittel zum Aufnehmen des ersten Gebersignals und Messmittel zum Aufnehmen des zweiten Gebersignals.

Die Messmittel können Messmittel sein, die im normalen Betrieb des Gebers bereits Einsatz finden, sodass zur Ermittlung des Überwachungsergebnisses keine zusätzlichen Messmittel erforderlich sind. Die Messmittel können beispielsweise eine sich mit einer Welle drehende Codescheibe optisch abtasten/erfassen.

In einer Ausgestaltung umfasst der Geber ferner eine Ausgabeeinheit, die zum Ausgeben eines Warnsignals basierend auf dem Überwachungsergebnis eingerichtet ist, und/ oder eine Abschalteinheit, die zum Abschalten des Gebers basierend auf dem Überwachungsergebnis eingerichtet ist.

Damit kann der Geber in geeigneter Weise auf das Überwachungsergebnis reagieren, wenn beispielsweise ein Fehler des Gebers erkannt wird (also wenn die Signale zu weit von dem gewünschten Kreis entfernt sind). Beispielsweise kann in einem solchen Fall eine Warnung ausgegeben werden, oder es kann der Betrieb komplett eingestellt werden. Beispielsweise kann auch ermittelt werden, wie weit die Signale von dem gewünschten Kreis entfernt sind, und dann kann ein Warnsignal ausgegeben werden, oder der Geber (und ggf. damit verbundene Geräte) abgeschaltet werden.

Erfindungsgemäß kann das Überwachungsergebnis an einem Empfangsort, der verschieden sein kann von einem Ort, an dem der Geber angeordnet ist, bestimmt werden. Damit können auch Fehler, die auf der Strecke vom Geber bis zum Empfangsort entstehen, detektiert werden.

Weitere vorteilhafte Ausgestaltungen der erfindungsgemäßen Verfahren ergeben sich aus den Unteransprüchen, der Zeichnung und der Beschreibung.

Die Erfindung wird nachfolgend anhand von Ausführungsbeispielen mit Bezug auf die Zeichnung beschrieben. Es zeigen in schematischen Darstellungen:

Fig. 1   ein Blockschaltbild einer Vorrichtung zur Überwachung einer Bewegung eines Gebers gemäß einer Ausführungsform;

Fig. 2   eine Illustration des ersten Gebersignals und des zweiten Gebersignals gemäß einer Ausführungsform; und

Fig. 3   eine Darstellung des ersten Gebersignals und des zweiten Gebersignals in einer anderen Darstellung gemäß einer Ausführungsform.

Nachfolgend wird die erfindungsgemäße Vorrichtung exemplarisch anhand von Ausführungsbeispielen erläutert.

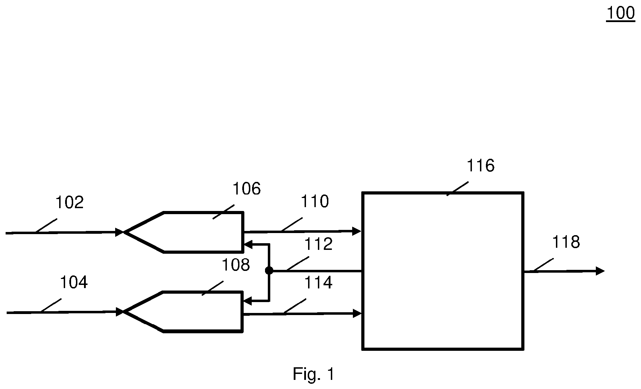

Fig. 1 zeigt ein Blockschaltbild einer Vorrichtung 100 zur Überwachung einer Bewegung eines Gebers gemäß einer Ausführungsform. Die Vorrichtung 100 enthält einen ersten Eingang und einen zweiten Eingang.

Der erste Eingang ist zum Empfangen eines ersten Gebersignals 102 des Gebers eingerichtet. Der zweite Eingang ist zum Empfangen eines zweiten Gebersignals 104 des Gebers eingerichtet. Der Vorrichtung 100 enthält ferner einen ersten Analog-Digital-Konverter 106, der das erste Gebersignal 102 empfängt, und einen zweiten Analog-Digital-Konverter 108, der das zweite Gebersignal 104 empfängt. Ein Ausgang 110 des ersten Analog-Digital-Konverters 106 und ein Ausgang 114 des zweiten Analog-Digital-Konverters 108 sind einer programmierbaren Logikgatter-Anordnung 116 zugeführt, die die ihr zugeführten Daten verarbeitet und so ein Überwachungsergebnis 118 erzeugt und ausgibt.

Beispielsweise entspricht das erste Gebersignal 102 einem Sinus-Verlauf und das zweite Gebersignal 104 einem Cosinus-Verlauf. Es wird dann die Summe der Quadrate der Gebersignale berechnet, was anschaulich "sin$^2$ + cos$^2$" entspricht. Das Ergebnis wird mit einer unteren Grenze (beispielsweise 0,8) und einer oberen Grenze (beispielsweise 1,2) verglichen. Liegt das Berechnungsergebnis innerhalb des durch die untere Grenze und die obere Grenze definierten Intervalls, wird ein positives Ergebnis als Überwachungsergebnis 118 ausgegeben.

In einer Ausgestaltung können neben der Berechnung der Summe der Quadrate müssen noch weitere Berechnungsschritte durchgeführt werden, da das erste Gebersignal 102 (welches beispielsweise Sin entspricht) und das zweite Gebersignal 104 (welches beispielsweise Cos entspricht) nicht um den 0-Punkt schwanken (oder schwingen), sondern mit einem Offset versehen werden. Die weiteren Berechnungsschritte gleichen dann diesen Offset aus.

Der erste Analog-Digital-Konverter 106 und der zweite Analog-Digital-Konverter 108 werden über ein von der programmierbaren Logikgatter-Anordnung 116 ausgegebenen Synchronisierungssignal 112 synchronisiert. Beispielsweise kann das Synchronisierungssignal 112 das Abtasten (englisch: sampling; also das Ermitteln des zu dem analogen Gebersignal gehörigen digitalen Datensignals) des ersten Analog-Digital-Konverters 106 und des zweiten Analog-Digital-Konverters 108 zeitgleich auslösen (in anderen Worten: triggern).

In einer anderen Ausgestaltung erfolgt die Triggerung durch einen separaten Komparator, der beispielsweise den Nulldurchgang eines der Signale (also beispielsweise des ersten Gebersignals 102 oder des zweiten Gebersignals 104) ermittelt. Diese Ermittlung könnte auch für weitere Diagnosezwecke z.B. für die Amplitudenbestimmung verwendet werden.

Wie in Fig. 1 gezeigt kann eine Vektorlängenüberwachung mit konkreten Schaltelementen, wie mehreren ADC und einer FPGA, erfolgen. Mittels der ADC werden Gebersignale erfasst. Die Auswertung der ADC Signale erfolgt im FPGA. Es erfolgt eine Schwellenüberwachung, ob sin$^2$ und cos$^2$ in einem zulässigen Bereich liegen.

Vorteilhafterweise weisen die ADCs eine minimale Abtastfrequenz f_sample auf von

$$f\_sample \geq n \times f\_Encoder\_Signal.$$

Dabei ist f_Encoder_Signal die maximale Ausgangsfrequenz des Encoders und n ein Faktor, der Anhand der anzunehmenden Fehlerszenarien und deren Aufdeckungswahrscheinlichkeit festgelegt ist.

Hier n lediglich mit dem Abtasttheorem ($n \geq 2$) zu bestimmen, würde die anzunehmenden Fehler nicht aufdecken.

Erfindungsgemäß kann mit n = 5 unter anderem der anzunehmende Fehler "Kurzschluss zwischen Sinus und Kosinus" innerhalb einer Encoder-Signal-Periode erkannt werden.

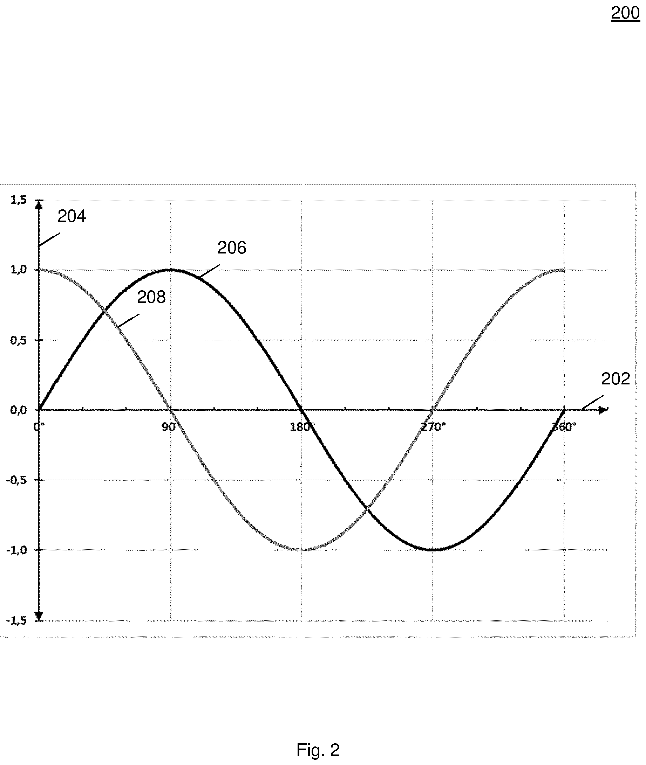

Fig. 2 zeigt eine Illustration 200 eines ersten Gebersignals 206 (welches dem ersten Eingang der Vorrichtung 100 zugeführt werden kann) und eines zweiten Gebersignals 208 (welches dem zweiten Eingang der Vorrichtung 100 zugeführt werden kann) gemäß einer Ausführungsform. Auf einer horizontalen Achse 202 ist die Zeit aufgetragen, und über einer vertikalen Achse 204 ist der Wert des zeitlichen Verlaufs des ersten Gebersignals 206 und des zweiten Gebersignals 208 aufgetragen.

Dabei kann das erste Gebersignal 206 einen zeitlichen Verlauf einer (Drehwinkel-)Position eines ersten Referenzpunktes des Gebers und das zweite Gebersignal 208 einen zeitlichen Verlauf einer (Drehwinkel-)Position eines zweiten Referenzpunktes des Gebers repräsentieren. Im dargestellten Beispiel sind der erste Referenzpunkt und der zweite Referenzpunkt um einen (Dreh-)winkel von 90° voneinander entfernt. Beispielsweise kann dann das erste Gebersignal 206 ein sinusförmiges Signal sein, und das zweite Gebersignal 208 kann ein cosinusförmiges Signal sein.

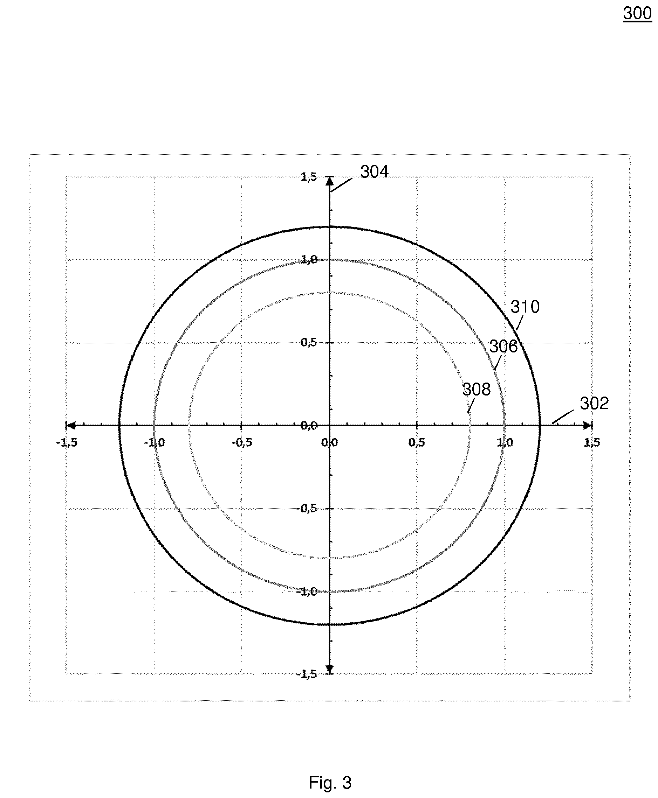

Für die funktional sichere Auswertung von Gebern mit Sinus- und Cosinus-Signalen kann erfindungsgemäß eine Überwachung dieser Signale bereitgestellt werden. Wie in Fig. 2 dargestellt beschreiben die beiden Größen Sinus und Cosinus in einem orthogonalen bzw. orthonormalen Koordinatensystem einen Kreis. Dieser Kreis kann mit zwei Schwellen überwacht werden, die ein unteres Limit und ein oberes Limit abbilden (wie durch die Kreise 308 und 310 in Fig. 3 dargestellt).

Mathematisch kann die Überwachung via Vektorlänge durch Überwachung der folgenden Gleichung realisierbar sein:

$$\sin^2(x) + \cos^2(x) = 1 = VL.$$

Dabei ist VL das Quadrat der vorgegebene Vektorlänge. Die vorgegebene Vektorlänge entspricht dem Radius des Kreises, den die sin- und cos-Signale beschreiben.

Dadurch lassen sich die Größen Amplitude, Offset und Phasenverschiebung der Signale in einem Wert der Vektorlänge überprüfen.

Fig. 3 zeigt eine Darstellung 300 des ersten Gebersignals 206 und des zweiten Gebersignals 208 in einer anderen Darstellung gemäß einer Ausführungsform. Das erste Gebersignal 206 ist über einer horizontalen Achse 302 aufgetragen, und das zweite Gebersignal 208 ist über einer vertikalen Achse 304 aufgetragen. So ergibt sich ein Kreis 306, dessen Koordinaten das erste Gebersignal 206 und das zweite Gebersignal 208 sind.

Falls der Geber nicht richtig funktioniert, beispielsweise weil eine Signalquelle, die beispielsweise auf einer Achse des Gebers deplatziert ist, oder weil der erste Referenzpunkt oder der zweite Referenzpunkt sich verschoben haben, ergibt sich kein Kreis 306, sondern beispielsweise eine von einem Kreis verschiedene Ellipse. Um nun zu überprüfen, ob der Geber richtig funktioniert, kann also überprüft werden, ob das erste Gebersignal 206 und das zweite Gebersignal 208 in einer Darstellung mit Achsen wie in Fig. 3 gezeigt einen Kreis 306 mit vorgegebenem Radius ergeben oder zumindest zwischen einem inneren Kreis 308 und einem äußeren Kreis 310 liegen. Das Überwachungsergebnis 118 der Vorrichtung 100 kann also beispielsweise angeben, ob das erste Gebersignal 102, 206 und das zweite Gebersignal 104, 208 Koordinaten eines Kreises mit vorgegebenem Radius sind.

Erfindungsgemäß wird überprüft, ob die Darstellung des ersten Gebersignals 102, 206 und des zweiten Gebersignals 104, 208 einen Kreis ergibt, dadurch, dass das erste Gebersignal 102, 206 und das zweite Gebersignal 104, 208 über separate Analog-Digital-Konverter 106, 108 einer gemeinsamen programmierbaren Logikgatter-Anordnung 116 zugeführt werden, die dann die nötigen Berechnungen zur Überwachung ausführt.

## Bezugszeichenliste

| | |
|---|---|
| 100 | Vorrichtung zur Überwachung eines Gebers |
| 102 | erstes Gebersignal |
| 104 | zweites Gebersignal |
| 106 | erster Analog-Digital-Konverter |
| 108 | zweiter erster Analog-Digital-Konverter |
| 110 | erstes Datensignal |
| 112 | Synchronisierungssignal |
| 114 | zweites Datensignal |
| 116 | programmierbare Logikgatter-Anordnung |
| 118 | Überwachungsergebnis |
| | |
| 200 | Illustration des ersten Gebersignals und des zweiten Gebersignals |
| 202 | horizontale Achse |
| 204 | vertikale Achse |
| 206 | erstes Gebersignal |
| 208 | zweites Gebersignal |
| | |
| 300 | Darstellung des ersten Gebersignals und des zweiten Gebersignals |
| 302 | horizontale Achse |
| 304 | vertikale Achse |
| 306 | Kreis |
| 308 | innerer Kreis |
| 310 | äußerer Kreis |

## Patentansprüche

1. Vorrichtung (100) zur Überwachung einer Vektorlänge eines Gebers, wobei die Vorrichtung aufweist:

    eine programmierbare Logikgatter-Anordnung (116);
    einen ersten Analog-Digital-Konverter (106), eingerichtet zum Empfangen eines ersten Gebersignals (102, 206) des Gebers und zum Ausgeben eines ersten Datensignals (110) an die programmierbare Logikgatter-Anordnung (116); und
    einen zweiten Analog-Digital-Konverter (108), eingerichtet zum Empfangen eines zweiten Gebersignals (104, 208) des Gebers und zum Ausgeben eines zweiten Datensignals (114) an die programmierbare Logikgatter-Anordnung (116);
    wobei die programmierbare Logikgatter-Anordnung (116) eingerichtet ist zum Verarbeiten des ersten Datensignals (110) und des zweiten Datensignals (114), um ein Überwachungsergebnis (118) zu erhalten,
    wobei eine Summe aus einem Quadrat des ersten Gebersignals (102, 206) und einem Quadrat des zweiten Gebersignals (104, 208) berechnet wird und überprüft wird, ob die Summe einem Quadrat einer gewünschten Vektorlänge entspricht;
    wobei der erste Analog-Digital-Konverter (106) und der zweite Analog-Digital-Konverter (108) synchronisiert sind;
    wobei die programmierbare Logikgatter-Anordnung (116) eingerichtet ist zum Ausgeben eines Synchronisierungssignals (112) an den ersten Analog-Digital-Konverter (106) und an den zweiten Analog-Digital-Konverter (108); und
    wobei der erste Analog-Digital-Konverter (106) und der zweite Analog-Digital-Konverter (108) eingerichtet sind, sich basierend auf dem Synchronisierungssignal (112) zu synchronisieren.

2. Vorrichtung (100) nach Anspruch 1,

    wobei das erste Gebersignal (102, 206) einen zeitlichen Verlauf einer Position eines ersten Referenzpunktes des Gebers repräsentiert, und wobei das zweite Gebersignal (104, 208) einen zeitlichen Verlauf einer Position eines zweiten Referenzpunktes des Gebers repräsentiert.

3. Vorrichtung (100) nach Anspruch 2,
wobei der erste Referenzpunkt und der zweite Referenzpunkt um einen Winkel von 90° voneinander entfernt liegen.

4. Vorrichtung (100) nach einem der vorstehenden Ansprüche,
wobei die Überwachung des Gebers eine Überwachung aufweist, ob das erste Gebersignal (102, 206) und das zweite Gebersignal (104, 208) Koordinaten eines Kreises mit vorgegebenem Radius sind.

5. Vorrichtung (100) nach einem der vorstehenden Ansprüche,
wobei die programmierbare Logikgatter-Anordnung (116) eine Mehrzahl von physischen Elementen aufweist, deren Verschaltung programmierbar ist.

6. Vorrichtung (100) nach einem der vorstehenden Ansprüche,
wobei die Vorrichtung (100) eingerichtet ist zum Ermitteln des Überwachungsergebnisses mit einer Frequenz von mindestens 1 MHz.

7. Vorrichtung (100) nach einem der vorstehenden Ansprüche, ferner aufweisend:

einen weiteren ersten Analog-Digital-Konverter, eingerichtet zum Empfangen eines weiteren ersten Gebersignals eines weiteren Gebers und zum Ausgeben eines weiteren ersten Datensignals an die programmierbare Logikgatter-Anordnung (116); und
einen weiteren zweiten Analog-Digital-Konverter, eingerichtet zum Empfangen eines weiteren zweiten Gebersignals des weiteren Gebers und zum Ausgeben eines weiteren zweiten Datensignals an die programmierbare Logikgatter-Anordnung (116);
wobei die programmierbare Logikgatter-Anordnung (116) ferner eingerichtet ist zum Verarbeiten des weiteren ersten Datensignals und des weiteren zweiten Datensignals, um ein weiteres Überwachungsergebnis zu erhalten.

8. Vorrichtung (100) nach Anspruch 7,

wobei der erste Analog-Digital-Konverter (106) und der zweite Analog-Digital-Konverter (108) synchronisiert sind; und
wobei der weitere erste Analog-Digital-Konverter und der weitere zweite Analog-Digital-Konverter synchronisiert sind.

9. System aufweisend:

die Vorrichtung (100) nach einem der vorstehenden Ansprüche; und
einen Geber, gekoppelt mit der Vorrichtung.

10. System nach Anspruch 9, wobei der Geber ferner aufweist:

Messmittel zum Aufnehmen des ersten Gebersignals (102, 206); und
Messmittel zum Aufnehmen des zweiten Gebersignals (104, 208).

11. System nach einem der Ansprüche 9 oder 10, wobei der Geber ferner aufweist:
eine Ausgabeeinheit, eingerichtet zum Ausgeben eines Warnsignals basierend auf dem Überwachungsergebnis (118).

12. System nach einem der Ansprüche 9 bis 11, wobei der Geber ferner aufweist:
eine Abschalteinheit, eingerichtet zum Abschalten des Gebers basierend auf dem Überwachungsergebnis (118).

**Claims**

1. An apparatus (100) for monitoring a vector length of an encoder, wherein the apparatus has:

a programmable logic gate arrangement (116);
a first analog-to-digital converter (106) configured to receive a first encoder signal (102, 206) of the encoder and to output a first data signal (110) to the programmable logic gate arrangement (116); and
a second analog-to-digital converter (108) configured to receive a second encoder signal (104, 208) of the encoder and to output a second data signal (114) to the programmable logic gate arrangement (116);
wherein the programmable logic gate arrangement (116) is configured to process the first data signal (110) and the second data signal (114) in order to obtain a monitoring result (118),
wherein a sum of a square of the first encoder signal (102, 206) and a square of the second encoder signal (104, 208) is calculated and it is checked whether the sum corresponds to a square of a desired vector length;
wherein the first analog-to-digital converter (106) and the second analog-to-digital converter (108) are synchronized;
wherein the programmable logic gate arrangement (116) is configured to output a synchronization signal (112) to the first analog-to-digital converter (106) and to the second analog-to-digital converter (108); and

wherein the first analog-to-digital converter (106) and the second analog-to-digital converter (108) are configured to synchronize based on the synchronization signal (112).

2. An apparatus (100) according to claim 1,

wherein the first encoder signal (102, 206) represents a time development of a position of a first reference point of the encoder, and wherein the second encoder signal (104, 208) represents a time development of a position of a second reference point of the encoder.

3. An apparatus (100) according to claim 2, wherein the first reference point and the second reference point are remote from one another by an angle of 90°.

4. An apparatus (100) according to any one of the preceding claims, wherein the monitoring of the encoder comprises a monitoring whether the first encoder signal (102, 206) and the second encoder signal (104, 208) are coordinates of a circle with a predefined radius.

5. An apparatus (100) according to any one of the preceding claims, wherein the programmable logic gate arrangement (116) comprises a plurality of physical elements whose interconnection is programmable.

6. An apparatus (100) according to any one of the preceding claims, wherein the apparatus (100) is configured to determine the monitoring result with a frequency of at least 1 MHz.

7. An apparatus (100) according to any one of the preceding claims, further comprising:

a further first analog-to-digital converter configured to receive a further first encoder signal of a further encoder and to output a further first data signal to the programmable logic gate arrangement (116); and a further second analog-to-digital converter configured to receive a further second encoder signal of the further encoder and to output a further second data signal to the programmable logic gate arrangement (116); wherein the programmable logic gate arrangement (116) is further configured to process the further first data signal and the further second data signal in order to obtain a further monitoring result.

8. An apparatus (100) according to claim 7,

wherein the first analog-to-digital converter (106) and the second analog-to-digital converter (108) are synchronized; and wherein the further first analog-to-digital converter and the further second analog-to-digital converter are synchronized.

9. A system comprising:

the apparatus (100) according to any one of the preceding claims; and an encoder coupled to the apparatus.

10. A system according to claim 9, wherein the encoder further has:

measurement means for picking up the first encoder signal (102, 206); and measurement means for picking up the second encoder signal (104, 208).

11. A system according to one of the claims 9 or 10, wherein the encoder further has: an output unit configured to output a warning signal based on the monitoring result (118).

12. A system according to any one of the claims 9 to 11, wherein the encoder further has: a switch-off unit configured to switch off the encoder based on the monitoring result (118).

**Revendications**

1. Dispositif (100) de surveillance d'une longueur vectorielle d'un codeur, le dispositif comprenant :

un réseau de portes logiques programmables (116) ; un premier convertisseur analogique-numérique (106) conçu pour recevoir un premier signal de codeur (102, 206) provenant du codeur et pour émettre un premier signal de données (110) vers le réseau de portes logiques programmables (116) ; et un deuxième convertisseur analogique-numérique (108) conçu pour recevoir un deuxième signal de codeur (104, 208) provenant du codeur et pour émettre un deuxième signal de données (114) vers le réseau de portes logiques programmables (116) ; dans lequel le réseau de portes logiques programmables (116) est conçu pour traiter le premier signal de données (110) et le deuxième signal de données (114) afin d'obtenir un résultat de surveillance (118) ; une somme d'un carré du premier signal de codeur (102, 206) et d'un carré du deuxième signal de codeur (104, 208) est calculée pour vérifier si la somme correspond à un carré d'une longueur vectorielle souhaitée ;

le premier convertisseur analogique-numérique (106) et le deuxième convertisseur analogique-numérique (108) sont synchronisés ;

le réseau de portes logiques programmables (116) est conçu pour émettre un signal de synchronisation (112) vers le premier convertisseur analogique-numérique (106) et vers le deuxième convertisseur analogique-numérique (108) ; et

le premier convertisseur analogique-numérique (106) et le deuxième convertisseur analogique-numérique (108) sont conçus pour se synchroniser sur la base du signal de synchronisation (112).

2. Dispositif (100) selon la revendication 1,
dans lequel le premier signal de codeur (102, 206) représente une évolution dans le temps d'une position d'un premier point de référence du codeur, et le deuxième signal de codeur (104, 208) représente une évolution dans le temps d'une position d'un deuxième point de référence du codeur.

3. Dispositif (100) selon la revendication 2,
dans lequel le premier point de référence et le deuxième point de référence sont espacés l'un de l'autre d'un angle de 90°.

4. Dispositif (100) selon l'une des revendications précédentes,
dans lequel la surveillance du codeur comprend une surveillance visant à déterminer si le premier signal de codeur (102, 206) et le deuxième signal de codeur (104, 208) sont des coordonnées d'un cercle de rayon prédéfini.

5. Dispositif (100) selon l'une des revendications précédentes,
dans lequel le réseau de portes logiques programmables (116) comprend une pluralité d'éléments physiques dont l'interconnexion est programmable.

6. Dispositif (100) selon l'une des revendications précédentes,
dans lequel le dispositif (100) est conçu pour déterminer le résultat de surveillance à une fréquence d'au moins 1 MHz.

7. Dispositif (100) selon l'une des revendications précédentes, comprenant en outre :

un autre premier convertisseur analogique-numérique, conçu pour recevoir un autre premier signal de codeur provenant d'un autre codeur et pour émettre un autre premier signal de données vers le réseau de portes logiques programmables (116) ; et

un autre deuxième convertisseur analogique-numérique, conçu pour recevoir un autre deuxième signal de codeur provenant de l'autre codeur et pour émettre un autre deuxième signal de données vers le réseau de portes logiques programmables (116) ;

le réseau de portes logiques programmables (116) étant en outre conçu pour traiter l'autre premier signal de données et l'autre deuxième signal de données afin d'obtenir un autre résultat de surveillance.

8. Dispositif (100) selon la revendication 7,
dans lequel le premier convertisseur analogique-numérique (106) et le deuxième convertisseur analogique-numérique (108) sont synchronisés ; et l'autre premier convertisseur analogique-numérique et l'autre deuxième convertisseur analogique-numérique sont synchronisés.

9. Système comprenant :

le dispositif (100) selon l'une des revendications précédentes ; et
un codeur couplé au dispositif.

10. Système selon la revendication 9,
dans lequel le codeur comprend en outre :

des moyens de mesure pour saisir le premier signal de codeur (102, 206) ; et
des moyens de mesure pour saisir le deuxième signal de codeur (104, 208).

11. Système selon l'une des revendications 9 ou 10,
dans lequel le codeur comprend en outre :
une unité de sortie conçue pour émettre un signal d'avertissement sur la base du résultat de surveillance (118).

12. Système selon l'une des revendications 9 à 11,
dans lequel le codeur comprend en outre :
une unité de désactivation conçue pour désactiver le codeur sur la base du résultat de surveillance (118).

Fig. 1

Fig. 2

300

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5777223 A
- CN 206578635 U
- CN 107769630 B